# EUROPÄISCHE PATENTSCHRIFT

(11) **EP 2 213 492 B1**
(45) Veröffentlichungstag und Bekanntmachung des Hinweises auf die Patenterteilung: **05.09.2012**
(21) Anmeldenummer: 10152410.6
(22) Anmeldetag: 02.02.2010
(51) Int. Cl.: B60J 7/22

(54) **Windschutzeinrichtung**
Wind blocker
Dispositif coupe-vent

(30) Priorität: 03.02.2009 DE 102009008193
(43) Veröffentlichungstag der Anmeldung: 04.08.2010
(73) Patentinhaber: SCAMBIA Industrial Developments Aktiengesellschaft, 9494 Schaan (LI)
(72) Erfinder: Götz, Matthias, 71706 Markgröningen (DE); Baudis, Klaus, 71706 Markgröningen (DE); Riehle, Jörg, 71679 Asperg (DE)
(74) Vertreter: Hoeger, Stellrecht & Partner Patentanwälte

(56) Entgegenhaltungen:
- EP-A1- 1 134 107
- EP-A2- 2 143 582
- DE-A1- 19 502 793
- DE-C1- 4 310 881
- US-A1- 2003 085 006

## Beschreibung

Die Erfindung betrifft eine Schutzeinrichtung für Kraftfahrzeuge, insbesondere eine Wind- und/oder Lichtschutzeinrichtung für Kraftfahrzeuge, umfassend einen eine Rahmenöffnung umschließenden Rahmen und ein die Rahmenöffnung verschließendes, am Rahmen gehaltenes Flachmaterial, welches sich in der Rahmenöffnung in einer Aufspannebene erstreckt, wobei der Rahmen aus zwei jeweils die Rahmenöffnung umschließenden Rahmenteilen gebildet ist, die miteinander verbunden sind, wobei zwischen den fest miteinander verbundenen Rahmenteilen das Flachmaterial mit einem Randbereich gehalten ist und wobei ein erstes Rahmenteil ein Fixierelement aufweist, an welchem der Randbereich formschlüssig fixierbar ist.

Derartige Schutzeinrichtungen sind aus der EP 1 134 107 A1 bekannt.

Diese finden entweder Anwendung als Sonnen- oder Lichtschutzeinrichtung in Kraftfahrzeugen, insbesondere an Fenstern oder an Karosserieöffnungen, oder sie finden Anwendung als Windschutzeinrichtung, insbesondere als sogenanntes Windschott, die bei einem Cabriofahrzeug hinter einer Sitzreihe angeordnet ist, um Zugerscheinungen im Bereich von auf den Sitzen sitzenden Personen, insbesondere im Kopfbereich derselben, zu vermeiden.

Bei derartigen Schutzeinrichtungen wird beispielsweise ein einstückiger Rahmen verwendet, welcher eine Nut aufweist, in der das Flachmaterial durch einen in die Nut eingedrückten Keder fixiert ist.

Eine derartige Fixierung des Flachmaterials an dem Rahmen stellt ein sehr aufwändiges Herstellungsverfahren dar.

Der Erfindung liegt daher die Aufgabe zugrunde, eine Schutzeinrichtung der gattungsgemäßen Art derart zu verbessern, dass diese einfach herstellbar ist.

Diese Aufgabe wird bei einer Schutzeinrichtung der eingangs beschriebenen Art erfindungsgemäß dadurch gelöst, dass das Fixierelement spitz ausgebildete Eingreifelemente aufweist, welche in den vor einem Kontakt mit den Eingreifelementen unversehrten, insbesondere mit keinen speziellen Öffnungen für die Eingreifelemente versehenen, Randbereich des Flachmaterials durchdringen und damit sich selbst in dem Material des Randbereichs Öffnungen schaffen, um diesen zu durchdringen.

Der Vorteil der erfindungsgemäßen Lösung ist darin zu sehen, dass damit eine einfache Verbindung des Flachmaterials an dem Rahmen möglich ist, nämlich dadurch, dass das Flachmaterial zwischen den fest miteinander verbundenen Rahmenteilen mit einem Randbereich gehalten ist und somit die Schutzeinrichtung einfach und kostengünstig herstellbar ist.

Insbesondere ist der Vorteil dieser Lösung darin zu sehen, dass durch die formschlüssige Fixierung des Flachmaterials eine besonders einfache und somit fertigungstechnisch günstige Möglichkeit der Fixierung gegeben ist, die außerdem dadurch, dass das Flachmaterial mit dem Randbereich zwischen den Rahmenteilen gehalten wird, ständig aufrecht erhalten wird.

Die formschlüssige Fixierung erfolgt erfindungsgemäß dadurch, dass das Fixierelement Eingreifelemente aufweist, welche in den Randbereich des Flachmaterials eingreifen.

Mit derartigen spitzen Eingreifelementen lässt sich in besonders einfacher Weise eine montagefreundliche formschlüssige Fixierung des Randbereichs an den Fixierelementen erreichen.

Eine besonders zweckmäßige Realisierung sieht vor, dass die den Randbereich durchgreifenden Eingreifelemente mit Endbereichen auf einer Seite des Randbereichs über diese überstehen.

Das heißt, dass die Eingreifelemente eine derartige Erstreckung aufweisen, dass diese nicht nur in den Randbereich eindringen, sondern diese durchdringen und dabei in einer Durchdringungsrichtung über den durchdrungenen Randbereich mit den Endbereichen überstehen.

Prinzipiell könnten die Eingreifelemente beliebig ausgebildet sein. Beispielsweise wäre es denkbar, als Eingreifelemente gebogene oder hakenförmige Elemente zu verwenden.

Eine besonders vorteilhafte Lösung sieht vor, dass die Eingreifelemente sich - insbesondere geradegerichtet - in Richtung einer Längsachse erstrecken.

Insbesondere ist es günstig, wenn die Eingreifelemente nadelähnlich ausgebildet sind, so dass sie in einfacher Weise den Randbereich des Flachmaterials beim Auflegen desselben auf die Eingreifelemente durchdringen und außerdem fixiert halten können.

Beispielsweise weisen die Eingreifelemente eine Spitze und einen die Spitze tragenden zumindest näherungsweise zylindrischen Schaft auf.

Um das Auflegen des Flachmaterials auf die Eingreifelemente und das danach folgende Durchdringen des Randbereichs seitens der Eingreifelemente bei der Montage des Flachmaterials in einfacher Weise realisieren zu können, ist vorzugsweise vorgesehen, dass sich die Eingreifelemente mit ihren Längsachsen parallel zueinander erstrecken.

Damit lässt sich in einfacher Weise das Flachmaterial mit dem Randbereich so auf die Gesamtheit der Eingreifelemente auflegen, dass der Randbereich parallel zu der Längsrichtung der Eingreifelemente relativ zu diesen bewegbar ist, um das Durchdringen des Randbereichs seitens der Eingreifelemente zu erreichen.

Besonders günstig ist es hierbei, wenn sich die Eingreifelemente ungefähr senkrecht zur Aufspannebene erstrecken, so dass das Flachmaterial in einer zur Aufspannebene parallelen Ebene ausgestreckt auf die Eingreifelemente aufgelegt und ungefähr senkrecht zu der späteren Aufspannebene bewegt werden kann, um das Durchdringen des Randbereichs seitens der Eingreifelemente zu erreichen.

Ferner wurde im Zusammenhang mit der bisherigen Erläuterung der einzelnen Ausführungsformen nicht näher darauf eingegangen, wie die Eingreifelemente angeordnet sind.

So sieht eine vorteilhafte Lösung vor, dass die Eingreifelemente in definierten Abständen um die Rahmenöffnung längs einer geschlossenen Linie umlaufend angeordnet sind, um das Flachmaterial sicher und überall faltenfrei zu fixieren.

Um eine definierte Lage des Randbereichs zu den Eingreifelementen zu erhalten, ist vorzugsweise vorgesehen, dass das Fixierelement eine Auflagefläche für den Randbereich des Flachmaterials aufweist.

Eine derartige Auflagefläche dient dazu, dass der Randbereich, nachdem die Eingreifelemente diesen durchgreifen, auf der Auflagefläche zum Aufliegen kommt und somit durch die Auflagefläche relativ zu den Eingreifelementen definiert ausgerichtet gehalten werden kann.

Beispielsweise könnte die Auflagefläche neben den Eingreifelementen verlaufen.

Eine besonders günstige Lösung sieht jedoch vor, dass die Eingreifelemente über die Auflagefläche überstehen.

Besonders günstig ist es dabei, wenn die Eingreifelemente mit ihrer Längsachse quer, vorzugsweise ungefähr senkrecht zur Auflagefläche verlaufen.

Im Zusammenhang mit der Lage der Auflagefläche wurde nicht deren Anordnung relativ zu der Aufspannebene definiert.

Beispielsweise wäre es denkbar, dass die Auflagefläche und die Aufspannebene nahe beieinander liegen, insbesondere im Wesentlichen fluchtend zueinander verlaufen.

Als besonders vorteilhaft hat es sich jedoch erwiesen, wenn die Auflagefläche bei miteinander verbundenen Rahmenteilen in Richtung quer zur Aufspannebene im Abstand von dieser angeordnet ist, so dass die Auflagefläche nicht in der Aufspannebene angeordnet ist.

Diese Lösung hat den Vorteil, dass dabei die Möglichkeit besteht, die Auflagefläche und die Eingreifelemente so anzuordnen, dass bei einem sich in der Aufspannebene erstreckenden Innenbereich des Flachmaterials der Randbereich in Richtung der Auflagefläche beaufschlagt ist.

Insbesondere lässt sich dies dann realisieren, wenn die Auflagefläche nicht der Aufspannebene zugewandt sondern der Aufspannebene abgewandt ist.

Vorzugsweise ist dabei ebenfalls vorgesehen, dass die Eingreifelemente sich ausgehend von der Auflagefläche nicht in Richtung der Aufspannebene, sondern entgegengesetzt dazu, das heißt in Richtung von der Aufspannebene weg, erstrecken.

Um sicherzugehen, dass der Randbereich stets so positioniert bleibt, dass die Eingreifelemente diesen durchgreifen, ist vorzugsweise vorgesehen, dass an einem zweiten Rahmenteil ein Niederhalteelement angeordnet ist, welches bei miteinander verbundenen Rahmenteilen den Randbereich in Eingriff mit den Eingreifelementen hält.

Vorzugsweise ist dabei das Niederhalteelement so ausgebildet, dass es auf mindestens einer Seite des Fixierelements auf den Randbereich einwirkt.

Beispielsweise ist dabei denkbar, dass das Niederhalteelement auf einer der Rahmenöffnung zugewandten Seite des Fixierelements auf den Randbereich einwirkt.

Eine weitere vorteilhafte Lösung sieht vor, dass das Niederhalteelement auf einer der Rahmenöffnung abgewandten Seite auf den Randbereich einwirkt.

Eine besonders günstige Lösung sieht vor, dass die Niederhalteelemente eine Aufnahme bilden, in welche das Fixierelement im verbundenen Zustand der Rahmenteile eingreift.

Eine weitere vorteilhafte Variante der erfindungsgemäßen Lösung sieht vor, dass in einem zweiten Rahmenteil ein Sicherungselement angeordnet ist, welches den Randbereich in einer Fixierstellung am Fixierelement hält.

Ein derartiges Sicherungselement kann in unterschiedlichster Art und Weise realisiert sein.

Beispielsweise kann das Sicherungselement integral im zweiten Rahmenteil vorgesehen sein.

Eine andere vorteilhafte Lösung sieht vor, dass das Sicherungselement in einer Aufnahme für das Fixierelement im zweiten Rahmenteil angeordnet ist.

Insbesondere ist es hierbei günstig, wenn im verbundenen Zustand der Rahmenteile die Eingreifelemente den Randbereich durchdringen und mit ihren über den Randbereich überstehenden Endbereichen zumindest teilweise in das Sicherungselement eindringen.

Hierbei kann das Sicherungselement spezielle Aufnahmen für die Endbereiche der Eingreifelemente aufweisen.

Eine besonders vorteilhafte Lösung sieht jedoch vor, dass das Sicherungselement aus einem durch die Endbereiche der Eingreifelemente verdrängbaren Material ist, das heißt, dass die Endbereiche der Eingreifelemente in das Material des Sicherungselements eindringen und dieses soweit verdrängen, dass Aufnahmen für die Endbereiche der Eingreifelemente gebildet werden.

Eine zweckmäßige Lösung sieht vor, dass das Sicherungselement aus einem weichelastischen Material ist.

Um das Flachmaterial in der Rahmenöffnung definiert in der Aufspannfläche geführt zu halten, ist vorzugsweise vorgesehen, dass die Rahmenteile im verbundenen Zustand an die Rahmenöffnung angrenzende Innenwände aufweisen, welche mit Führungsflächen einen sich in der Rahmenöffnung erstreckenden Innenbereich des Flachmaterials in der Aufspannfläche geführt halten.

Diese Lösung hat den Vorteil, dass damit eine definierte Festlegung der Lage der Aufspannfläche relativ zu den Rahmenteilen gegeben ist.

Insbesondere ist es dabei vorteilhaft, wenn im verbundenen Zustand der Rahmenteile die Auflagefläche des Fixierelements in Richtung quer zur Aufspannfläche im Abstand von dieser angeordnet ist.

Bei dieser Lösung ist es insbesondere vorteilhaft, wenn im verbundenen Zustand der Rahmenteile der Randbereich von den Führungsflächen der Innenwände in Form eines Umlenkabschnitts zu der Auflagefläche des Fixierelements verläuft.

Diese Lösung hat den Vorteil, dass ausgehend von einem Auflegen des Flachmaterials auf das Fixierelement und somit mit dem Randbereich auf die Auflagefläche des Fixierelements in einfacher Weise ein Spannen des Flachmaterials im Innenbereich dadurch erfolgen kann, dass die Rahmenteile in den miteinander verbundenen Zustand gebracht werden und damit durch die Führungsflächen die Lage der Aufspannfläche so festgelegt werden kann, dass der zumindest abschnittsweise quer zur Aufspannfläche verlaufende Umlenkabschnitt entsteht und dadurch ein Spannen des zunächst nicht gespannt am Fixierelement gehaltenen Flachmaterials möglich wird.

Insbesondere ist es somit zweckmäßig, wenn im verbundenen Zustand der Rahmenteile der Innenbereich des Flachmaterials in Richtung der Aufspannebene mit Vorspannung an dem Rahmen gehalten ist.

Hinsichtlich der Verbindung der Rahmenteile miteinander wurden bislang keine näheren Angaben gemacht.

So sieht eine vorteilhafte Lösung vor, dass die Rahmenteile stoffschlüssig miteinander verbunden sind.

Eine andere vorteilhafte Lösung sieht jedoch vor, dass beide Rahmenteile Verbindungselemente aufweisen, die zumindest kraftschlüssig miteinander in Eingriff bringbar sind, um die Rahmenteile miteinander zu verbinden.

Eine derartige kraftschlüssige Verbindung der Rahmenteile hat insbesondere den Vorteil, dass sich diese durch einfaches Ineinanderdrücken der Verbindungselemente realisieren lässt.

Eine vorteilhafte Realisierung sieht vor, dass eines der Verbindungselemente als Zapfen ausgebildet ist und das andere der Verbindungselemente als Hülse ausgebildet ist.

Eine besonders einfache Realisierungsform sieht vor, dass das als Zapfen ausgebildete Verbindungselement reibschlüssig in dem als Hülse ausgebildeten Verbindungselement fixierbar ist.

Insbesondere ist zweckmäßigerweise der Zapfen in die Hülse einpressbar.

Ein derartiger Zapfen lässt sich vorteilhafterweise und einfach in die Hülse eindrücken und dann fixieren, wenn dessen Wandflächen eine geringe Konizität aufweisen, die so klein ist, dass der Zapfen in der Hülse verklemmt.

Hinsichtlich der Lage der Verbindungselemente wurden im Zusammenhang mit der bisherigen Erläuterung der Ausführungsbeispiele keine näheren Angaben gemacht.

So sieht eine zweckmäßige Lösung vor, dass die Verbindungselemente auf einer der Rahmenöffnung abgewandten Seite des Fixierelements angeordnet sind.

Beispielsweise würden wenige punktuell angeordnete Verbindungselemente reichen um eine sichere und dauerhafte Verbindung der Rahmenteile zu erhalten, insbesondere auch die Rahmenteile über den ganzen Umfang um die Rahmenöffnung stabil miteinander zu verbinden, ist vorzugsweise vorgesehen, dass die Verbindungselemente umlaufend um die Rahmenöffnung in Abständen voneinander angeordnet sind.

Eine andere vorteilhafte Realisierung der Verbindung der erfindungsgemäßen Rahmenteile sieht vor, dass die Rahmenteile durch Krallen relativ zueinander fixierbar sind.

Derartige Krallen stellen insbesondere dann, wenn sie eine Mischung einer kraftschlüssigen und durch Eingraben in das Material mindestens zum Teil formschlüssigen Verbindung darstellen, eine besonders geeignete Lösung zum Verbinden der beiden Rahmenteile dar.

Die Krallen könnten prinzipiell an beliebiger Stelle der Rahmenteile angeordnet sein.

Eine zweckmäßige Lösung sieht vor, dass die Krallen in einem an einem der Rahmenteile vorgesehenen Innenbereich angeordnet sind.

Insbesondere ist dabei vorgesehen, dass die Krallen an einem in dem Innenbereich angeordneten Trägerelement gehalten sind.

Um eine Verbindung zwischen den Rahmenteilen herzustellen, ist dabei vorzugsweise vorgesehen, dass sich die Krallen an einem im Innenbereich im anderen Verbindungselement vorgesehenen Krallengegenelement verkrallen.

Insbesondere sind die Krallen so ausgebildet, dass die Krallen in einer Einschieberichtung zum Krallengegenelement verschiebbar sind und bei einer Bewegung in entgegengesetzter Richtung zur Einschieberichtung sich in das Krallengegenelement eingraben und somit nicht nur eine kraftschlüssige Verbindung bewirkt, sondern insbesondere eine formschlüssige Verbindung.

Das Krallengegenelement kann in unterschiedlichster Art und Weise ausgebildet sein. Eine vorteilhafte Lösung sieht vor, dass das Krallengegenelement eine Aufnahme für die Krallen darstellt.

Hinsichtlich der Anordnung der Krallen sind die unterschiedlichsten Realisierungsformen denkbar.

Eine Möglichkeit sieht vor, dass die Krallen unmittelbar an das Rahmenteil angeformt oder fest mit diesem verbunden sind.

Insbesondere bei einer Verbindung der Krallen mit einem der Rahmenteile ist es günstig, wenn die Krallen an Krallenelementen angeordnet sind.

Derartige Krallenelemente können beispielsweise U-förmig gebogene Elemente, beispielsweise U-förmig gebogene Blechteile sein.

Insbesondere ist es jedoch vorteilhaft, wenn die Krallenelemente an dem Trägerelement festlegbar sind.

Dabei sieht eine zweckmäßige Lösung vor, dass das Krallenelement auf das Trägerelement aufschiebbar ist und sich durch Krallen gegen eine Bewegung entgegen einer Aufschieberichtung im Material des Trägerelements verkrallt.

Das heißt, dass auch in diesem Fall eine Mischung aus einer kraftschlüssigen und einer formschlüssigen Verbindung zwischen Trägerelement und Krallenelement auftritt.

Ferner sieht eine vorteilhafte Lösung vor, dass die Aufnahme für die Krallen eine Aufnahme für die Krallenelemente ist.

Auch in diesem Fall ist somit vorzugsweise vorgesehen, dass die Krallenelemente in die Aufnahme des anderen Rahmenteils einschiebbar sind.

Hinsichtlich der Anordnung der Krallen an den Krallenelementen wurden dabei keine näheren Angaben gemacht.

Eine besonders einfache realisierbare und kostengünstige Lösung sieht dabei vor, dass die Krallen durch Ausbiegungen des Krallenelements gebildet sind.

Insbesondere ist dabei zweckmäßigerweise vorgesehen, dass die Krallen an Seitenschenkeln eines U-förmig gebogenen Krallenelements angeordnet sind.

Weitere Merkmale sind Gegenstand der nachfolgenden Beschreibung sowie der zeichnerischen Darstellung einiger Ausführungsbeispiele.

In der Zeichnung zeigen:
- Fig. 1: eine Frontansicht einer erfindungsgemäßen Schutzeinrichtung im zusammengebauten Zustands in Form eines Windschotts;
- Fig. 2: eine Explosionsdarstellung der Schutzeinrichtung unter Darstellung der Rahmenteile;
- Fig. 3: eine Draufsicht auf ein erstes der Rahmenteile;
- Fig. 4: eine vergrößerte Darstellung des Bereichs B in Fig. 3;
- Fig. 5: eine Draufsicht ähnlich Fig. 3 auf ein zweites Rahmenteil;
- Fig. 6: eine vergrößerte Darstellung des Bereichs C in Fig. 5;
- Fig. 7: einen vergrößerten Schnitt durch die beiden Rahmenteile im noch nicht zusammengebauten Zustand;
- Fig. 8: einen Schnitt ähnlich Fig. 7 durch die Rahmenteile im miteinander verbundenen Zustand im Bereich eines Eingreifelements;
- Fig. 9: einen Schnitt ähnlich Fig. 8 außerhalb des Bereichs eines Eingreifelements;
- Fig. 10: eine Draufsicht ähnlich Fig. 3 auf ein zweites Ausführungsbeispiel eines ersten Rahmenteils;
- Fig. 11: eine vergrößerte perspektivische Darstellung ähnlich Fig. 4 mit schematischer Darstellung von Krallenelementen zur Verbindung der Rahmenteile und
- Fig. 12: einen Schnitt ähnlich Fig. 8 durch das zweite Ausführungsbeispiel im Bereich eines Krallenelements.

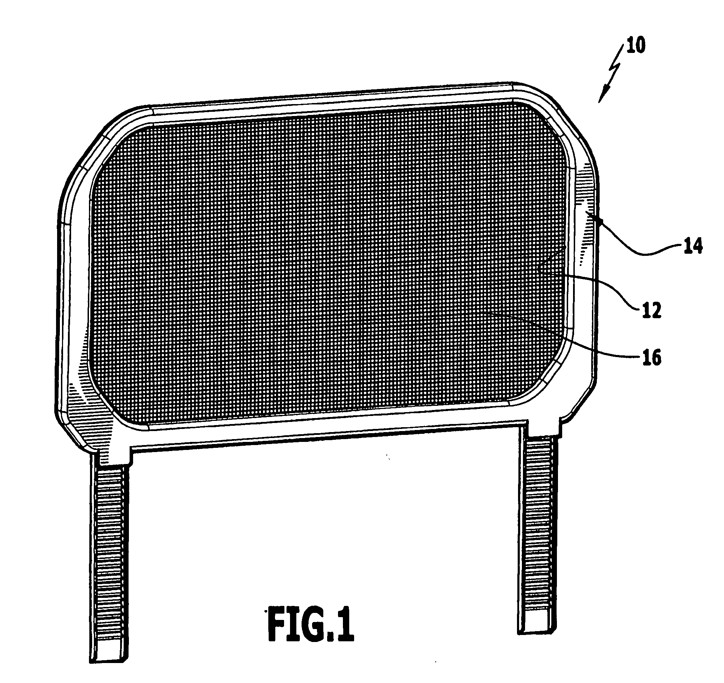

Ein erstes Ausführungsbeispiel einer erfindungsgemäßen Windstopeinrichtung 10, dargestellt in Fig. 1, umfasst einen eine Rahmenöffnung 12 umschließenden Rahmen 14, wobei sich in der Rahmenöffnung 12 ein für Luft teildurchlässiges Flachmaterial 16 erstreckt, welches die Rahmenöffnung 12 verschließt.

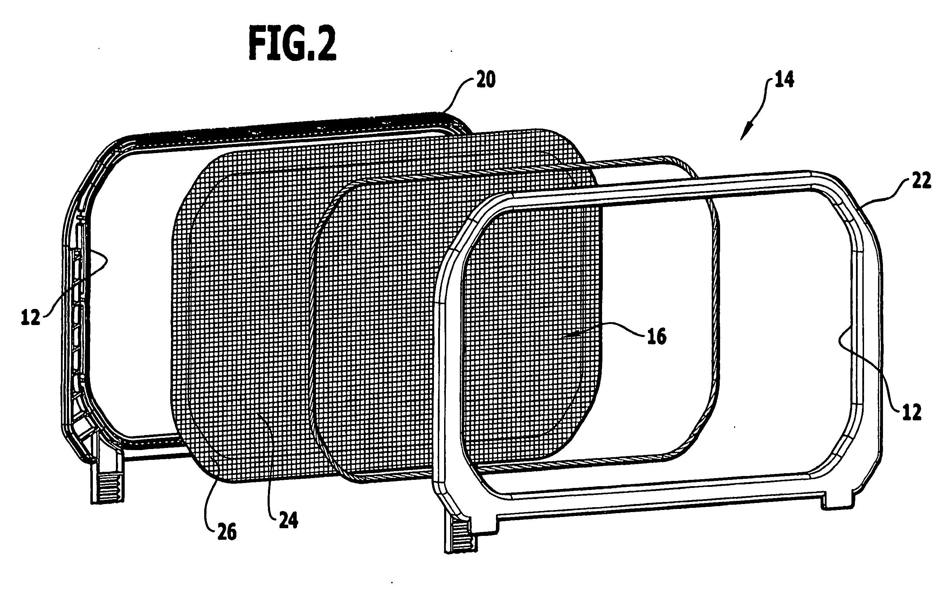

Wie in Fig. 2 dargestellt, wird dabei der Rahmen 14 von zwei Rahmenteilen 20 und 22 gebildet, von denen jedes an die Rahmenöffnung 12 angrenzt und diese umschließt. Das Flachmaterial 16 umfasst einen die Rahmenöffnung 12 verschließenden und sich in einer Aufspannebene 18 erstreckenden inneren Bereich 24, sowie einen Randbereich 26, welcher - wie nachfolgend beschrieben - zwischen den Rahmenteilen 20 und 22 verläuft und an diesen fixierbar ist.

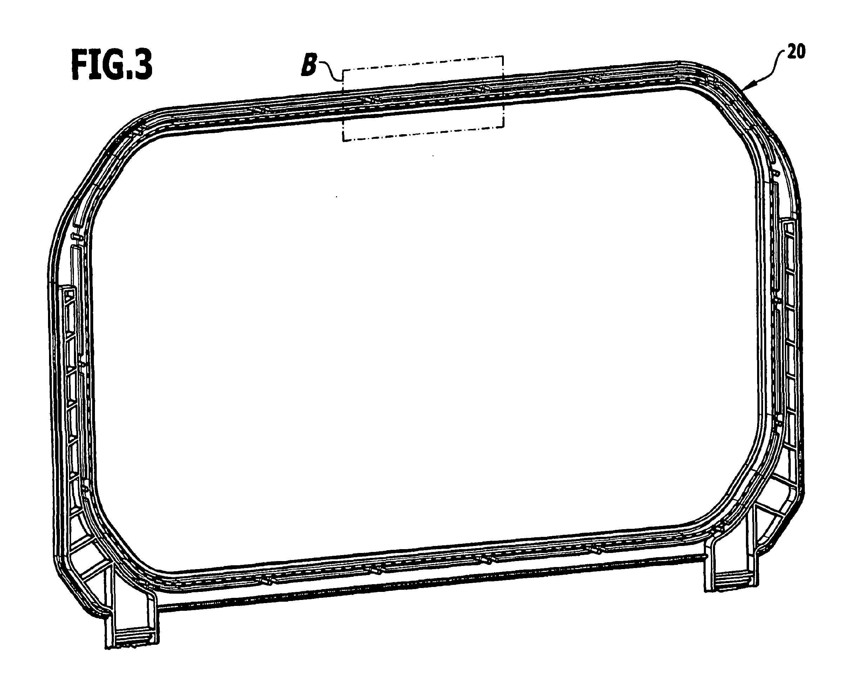

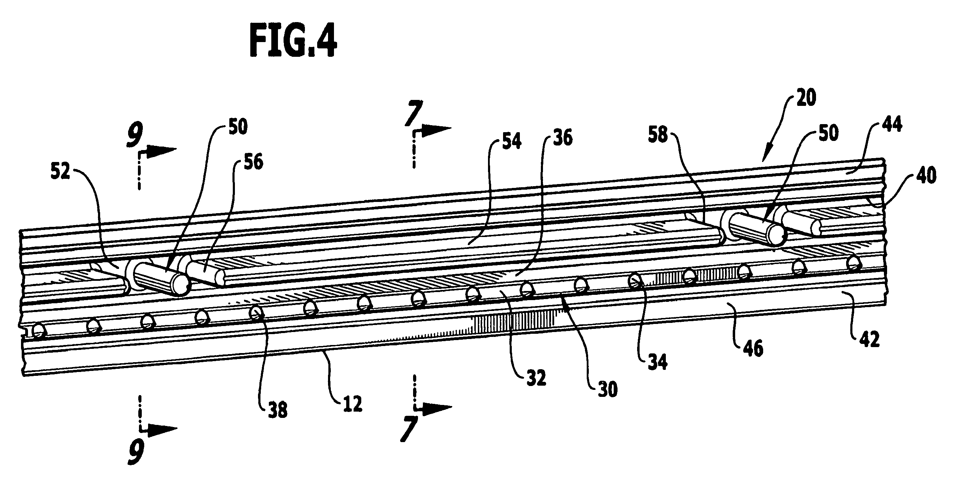

Wie in Fig. 3 und 4 dargestellt, umfasst das Rahmenteil 20 ein Fixierelement 30, welches eine Auflagefläche 32 trägt, auf welcher das Flachmaterial 16 mit seinem Randbereich 26 auflegbar ist, und mit Eingreifelementen 34 versehen ist, welche sich über die Auflagefläche 32 erheben und zum Fixieren des Randbereichs 26 des Flachmaterials 16 in diesen eingreifen.

Beispielsweise weisen die Eingreifelemente 40 einen sich über der Auflagefläche 32 erhebenden zylinderähnlichen Schaft und eine Spitze auf.

Die Eingreifelemente 34 sind dabei beispielsweise in konstanten Abständen voneinander angeordnet und erstrecken sich mit ihren Längsachsen 38 parallel zueinander und quer, vorzugsweise senkrecht zur Auflagefläche 32.

Das Fixierelement 30 ist beispielsweise in Form einer um die Rahmenöffnung 12, jedoch im Abstand von dieser geschlossen umlaufenden Leiste 36 ausgebildet, welche in einem Innenbereich 40 des Rahmenteils 20 und im Abstand von einer Innenwand 42 und einer Außenwand 44 des Rahmenteils 20 verläuft.

Vorzugsweise bildet dabei die unmittelbar an die Rahmenöffnung 12 anschließende Innenwand 42 eine Führungsfläche 46, welche das Flachmaterial 16 in unmittelbarem Anschluss an den inneren Bereich 24 in einer Aufspannebene geführt hält, während die Auflagefläche 32 im Abstand von der Führungsfläche 46 verläuft.

Darüber hinaus umfasst das Rahmenteil 20 noch zwischen der Außenwand 44 und dem Fixierelement 30 angeordnete erste Verbindungselemente 50, die beispielsweise in Form von Zapfen ausgebildet sind, die sich über einem Boden 52 des Rahmenteils 20 erheben und frei, das heißt mit Zwischenräumen zwischen der Außenwand 44 und dem Fixierelement 30 verlaufen.

Zweckmäßigerweise sind noch sich zwischen aufeinanderfolgenden Verbindungselementen 50 erstreckende und ebenfalls im Abstand zwischen der Außenwand 44 und dem Fixierelement 30 verlaufende Leisten 54 vorgesehen, deren Enden 56 und 58 jeweils im Abstand von den Verbindungselementen 50 liegen, so dass zwischen den Enden 56 und 58 und dem jeweiligen Verbindungselement 50 ein Zwischenraum verbleibt.

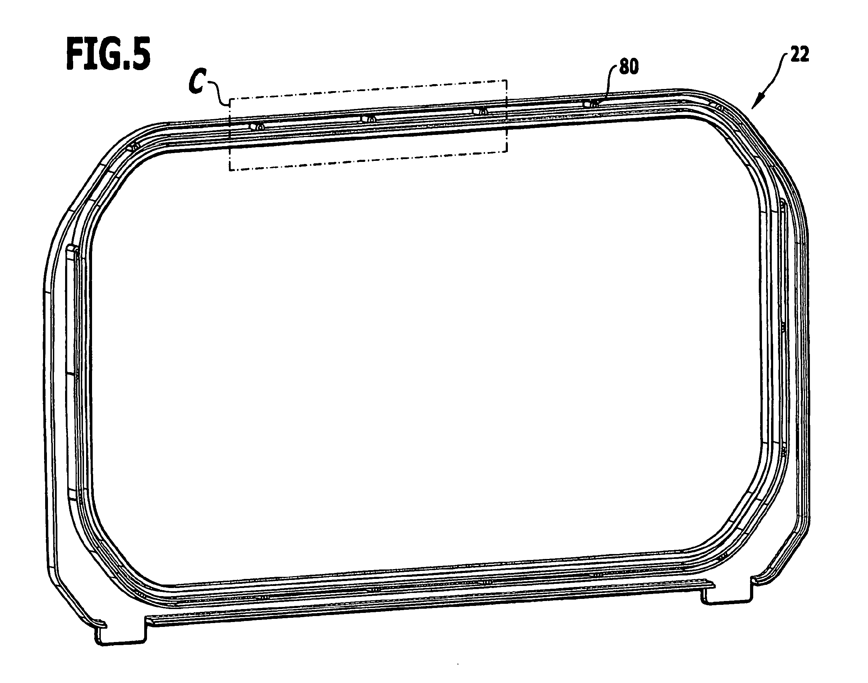

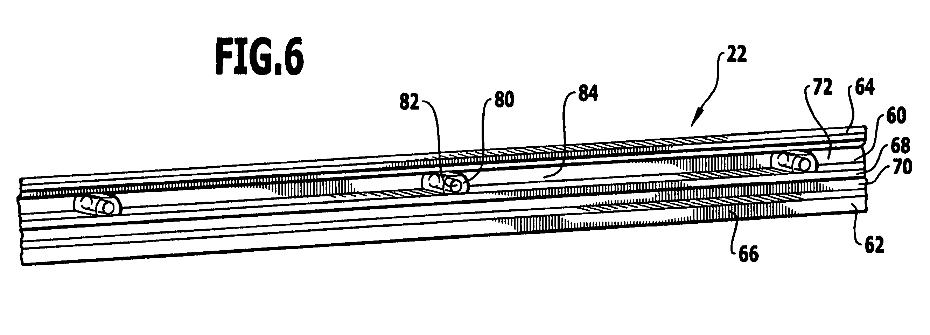

Wie in Fig. 5 und 6 dargestellt, ist das Rahmenteil 22 komplementär zum Rahmenteil 20 ausgebildet und weist einen Innenbereich 60 auf, der zwischen einer Innenwand 62 und einer Außenwand 64 liegt.

In dem Innenbereich 60 ist im Anschluss an die Innenwand 62 eine Aufnahme 70 vorgesehen, in welche das Fixierelement 30 eingreifen kann, wobei die Aufnahme 70 beispielsweise als Nut ausgebildet ist, die zwischen einem Steg 68 und der Innenwand 62 angeordnet ist, wobei sich der Steg 68 über einem Boden 72 des Verbindungselements 22 erhebt.

Ferner liegen zwischen dem Steg 68 und der Außenwand 64 des Rahmenteils 22 als zweite Verbindungselemente 80 ausgebildete Hülsen, welche eine Ausnehmung 82 umschließen, in welche die ersten, als Zapfen ausgebildeten Verbindungselemente 50 eingreifen und in welchen diese beispielsweise kraftschlüssig durch eine Klemmung fixiert werden können.

Zwischen den Verbindungselementen 80, die einerseits an den Steg 68 und andererseits an die Außenwand 64 angeformt sind, liegen noch Vertiefungen 84, in welche die Leisten 54 eintauchen können.

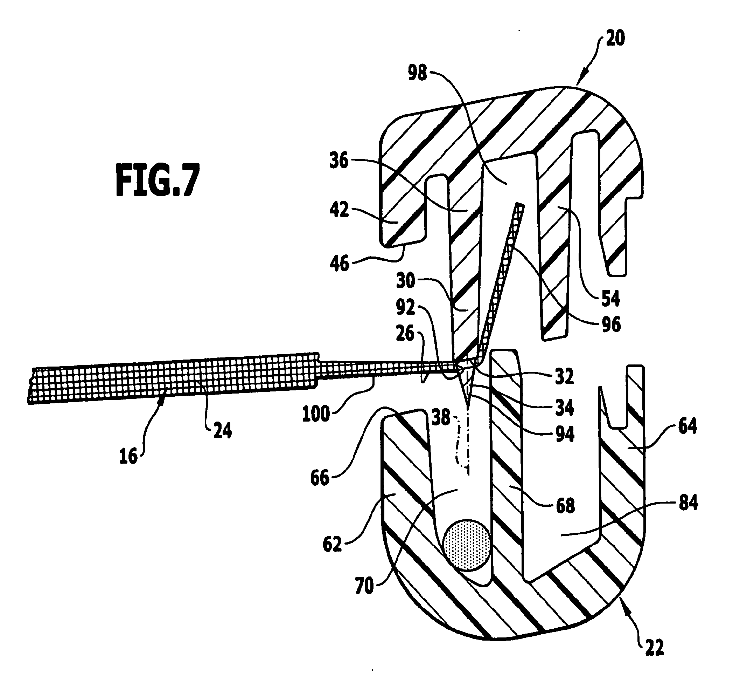

Wie in Fig. 7 dargestellt, ist das Fixierelement 30 so ausgebildet, dass der Randbereich 26 des Flachmaterials 16 auf der Auflagefläche 32 aufgelegt werden kann, wobei die über die Auflagefläche 32 überstehenden Eingreifelemente 34, die beispielsweise kegelförmige Spitzen umfassen, welche sich mit ihrer Kegelachse koaxial zur Längsachse 38 erstrecken, den Randbereich 26 durchstechen und somit sich im Randbereich 26 beim Durchstecken bildende Öffnungen 92 durchgreifen und mit Endbereichen 94 über die Öffnungen 92 im Randbereich 26 auf einer der Auflagefläche 32 gegenüberliegenden Seite überstehen.

Somit liegt in der Fixierstellung der Randbereich 26 zwischen den Öffnungen 92 unmittelbar auf der jeweiligen Auflagefläche 32 auf und wird im Bereich der Öffnungen 92 durch den Schaft der Eingreifelemente 34 gegen eine Verschiebung relativ zu dem jeweiligen Fixierelement 30 gehalten.

Der Randbereich 26 erstreckt sich auch über die Öffnungen 92 mit einem äußeren Randbereich 96 hinaus, welcher so bemessen ist, dass dieser in einem Zwischenraum zwischen dem Fixierelement 30 und der jeweiligen Leiste 54 oder dem Verbindungselement 50 liegt.

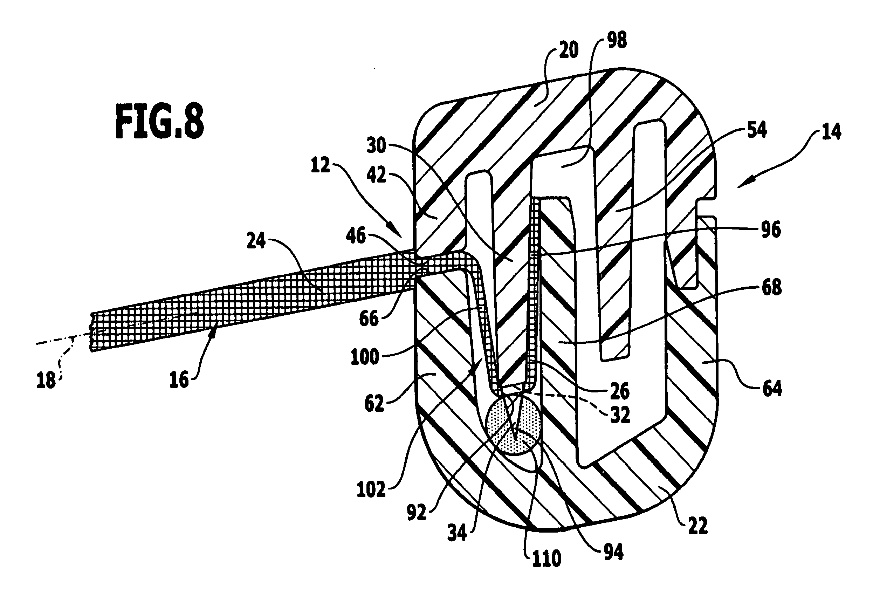

Ein Zusammensetzen der Rahmenteile 20 und 22 führt nun, wie in Fig. 8 dargestellt, dazu, dass die Innenwand 62 mit ihrer Führungsfläche 66 auf einen zwischen der Auflagefläche 32 und dem inneren Bereich 24 liegenden inneren Randbereich 100 einwirkt und diesen inneren Randbereich 100, der sich, wie in Fig. 7 dargestellt, bei lediglich an dem Fixierelement 30 gehaltenem Flachmaterial 16 mit dem inneren Bereich 24 zusammen und ausgehend von der Auflagefläche 32 des Fixierelements 30 in einer gemeinsamen, nicht durch zusätzliche Einwirkung gestörten Fläche erstreckt, zu einem Umlenkabschnitt 102 umformt, welcher sich ausgehend von einer Aufspannebene 104 des inneren Bereichs quer zu dieser erstreckt und zwischen der inneren Wand 62 und dem Fixierelement 30 bis zur Auflagefläche 32 verläuft, wodurch ein Spannen des inneren Bereichs 24 in Richtung der Aufspannebene 18 erfolgt. Die innere Wand 62 hat somit, bezogen auf die Auflagefläche 32 und die Eingreifelemente 34 die Aufgabe eines Niederhalteelements, das dafür sorgt, dass die Öffnungen 92 nicht außer Eingriff mit den Eingreifelementen kommen, sondern stets in Richtung der Auflagefläche 32 kraftbeaufschlagt sind. Dabei liegt der Umlenkabschnitt 102 zwischen der Auflagefläche 32 und den Führungsflächen 46 und 66 der Innenwände 42 und 62 im Wesentlichen frei in der Aufnahme 70 und wird vorzugsweise durch die Führungsflächen 46 und 66 eingeklemmt und somit definiert geführt am Rahmen 14 gehalten. Zur weiteren Sicherung des Randbereichs 26 in den miteinander verbundenen Rahmenteilen 20 und 22 ist vorzugsweise noch vorgesehen, dass der äußere Randbereich 96 des Flachmaterials 16 im verbundenen Zustand der Rahmenteile 20 und 22 zwischen dem Steg 68 und dem Fixierelement 30 geklemmt ist, um dadurch den Randbereich 26 gegebenenfalls noch zusätzlich zu fixieren, wobei der Steg 68 ebenfalls als Niederhalteelement wird, um den äußeren Randbereich 96 an der Auflagefläche 32 anliegend zu halten. Damit ist das Flachmaterial 16 in einfacher Weise an einem Rahmenteil 20 vorfixierbar und durch Zusammensetzen und Verbinden der Rahmenteile 20 und 22 mit Vorspannung spannbar, so dass sich der innere Bereich 24 mit Vorspannung in Richtung der Aufspannebene 104 erstreckt und somit in vorgespanntem Zustand die Rahmenöffnung 12 überdeckt.

Um ferner sicherzustellen, dass die Eingreifelemente 34 dauerhaft die Öffnungen 92 durchgreifen und somit den Randbereich 26 fixiert am Fixierelement 30 halten, ist in der Aufnahme 70 noch ein Sicherungselement 110 vorgesehen, in welches die Endbereiche 94 der Eingreifelemente 34 eindringen können und welches den Randbereich 26 zwischen den Eingreifelementen 34 in Anlage an der Auflagefläche 32 hält. Das Sicherungselement 110 kann dabei entweder aus einem in sich steifen Körper ausgebildet sein, der Aufnahmen für die Endbereiche 94 aufweist oder aus einem weichen, beispielsweise auch weichelastischem Material, in welches die Endbereiche 94 der Eingreifelemente 34 einstechen können.

Vorzugsweise ist das Sicherungselement 110 ein in die Aufnahme 70 einlegbares Teil aus einem elastischen Material, welches durch das Fixierelement 30 in die Aufnahme 70 eindrückbar ist und sich an die Form der Aufnahme 70 sowie die Position des Fixierelements 30 im verbundenen Zustand der Rahmenteile elastisch anpasst.

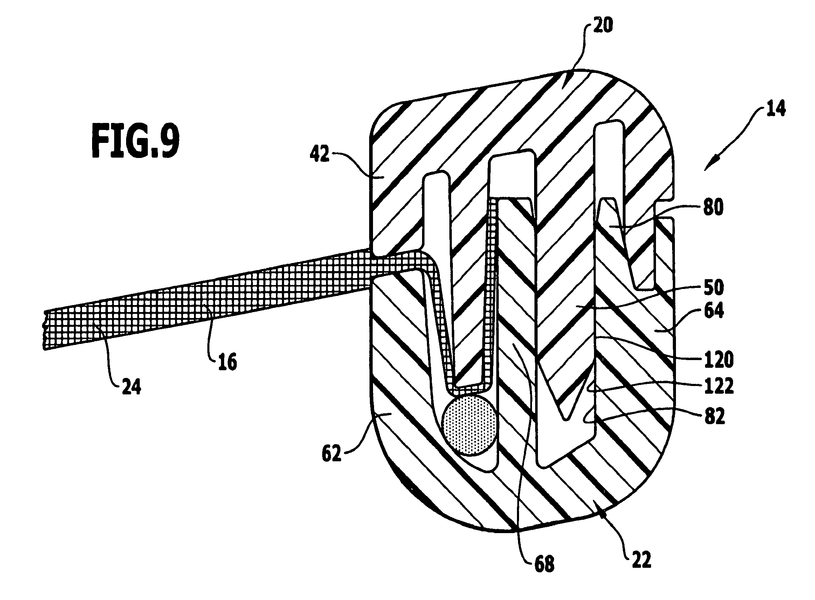

Wie in Fig. 9 dargestellt, erfolgt bei dem ersten Ausführungsbeispiel eine Verbindung der Rahmenteile 20 und 22 im zusammengesetzten Zustand dadurch, dass das als Zapfen ausgebildete Verbindungselement 50 in die Ausnehmung 82 des als Hülse ausgebildeten Verbindungselements 80 eingreift und eine Außenwand 120 des als Zapfen ausgebildeten Verbindungselements 50 einen Reibschluss mit einer Innenwand 122 der Ausnehmung 82 eingeht, das heißt, dass der Zapfen 50 so ausgebildet ist, dass er klemmend in die Ausnehmung 82 einpressbar ist, um somit eine kraftschlüssige Verbindung zwischen dem ersten Verbindungselement 50 und dem zweiten Verbindungselement 80 herzustellen.

Gegebenenfalls lässt sich eine derartige kraftschlüssige Verbindung zwischen den Verbindungselementen 50 und den Verbindungselementen 80 noch dadurch weiter sichern, dass beispielsweise ein Klebstoff entweder in die Ausnehmungen 82 oder in die Vertiefung 84 eingebracht wird.

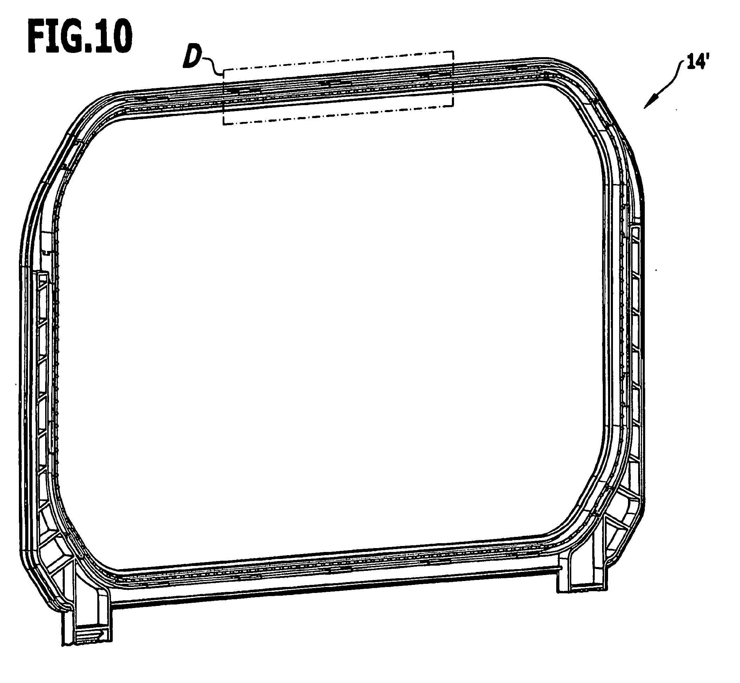

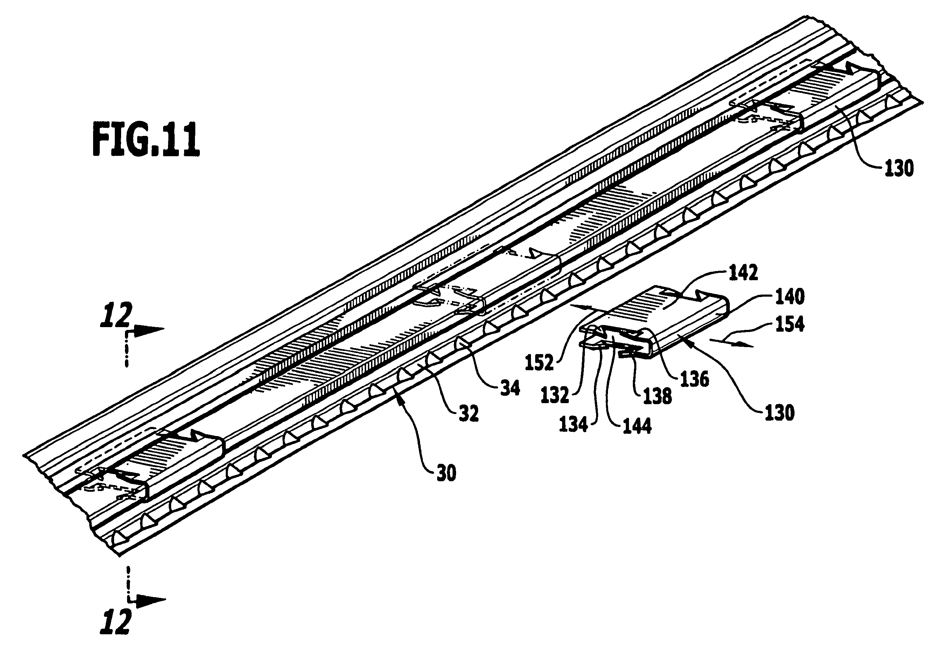

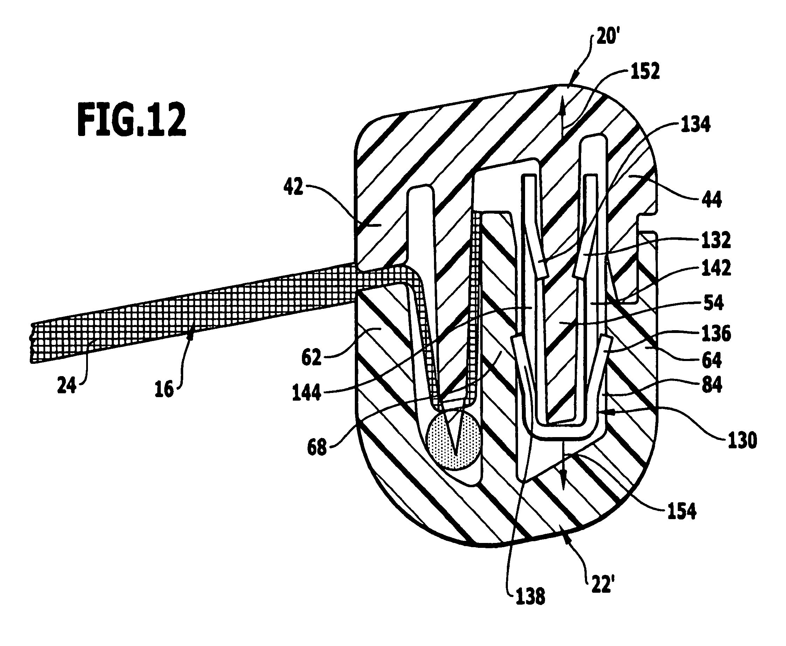

Bei einem zweiten Ausführungsbeispiel eines erfindungsgemäßen Rahmens 14', dargestellt in den Fig. 10 bis 12, ist das Fixierelement 30 mit der Auflagefläche 32 und den Eingreifelementen 34 in gleicher Weise ausgebildet wie beim ersten Ausführungsbeispiel. Im Übrigen sind auch die Rahmenteile 20' und 22' bis auf das Vorsehen der Verbindungselemente 50 und 80 in gleicher Weise ausgebildet wie beim ersten Ausführungsbeispiel. Anstelle der Verbindungselemente 50 und 80 erfolgt, wie in den Fig. 10 bis 12 dargestellt, eine Verbindung der Rahmenteile 20' und 22' durch Krallenelemente 130.

Derartige Krallenelemente 130 können beispielsweise an die Leisten 54 des ersten Rahmenteils 20' angeformt sein und sich beispielsweise in der Außenwand 64 und/oder dem Steg 68 verkrallen oder an die Außenwand 64 und den Steg 68 angeformt sein und sich mit der Leiste 54 verkrallen.

Besonders günstig ist jedoch bei dem dargestellten Ausführungsbeispiel, wenn die Krallenelemente 130 separate Elemente sind, die Krallen 132 und 134 aufweisen, welche sich in den Leisten 54 verkrallen, und Krallen 136 und 138 aufweisen, welche sich in der Außenwand 64 und dem Steg 68 verkrallen.

Vorzugsweise sind die Krallenelemente 130 aus einem U-förmigen Flachmaterial, vorzugsweise aus Metall, ausgebildet, welches eine Basis 140 und von dieser ausgehende und sich ungefähr parallel zueinander erstreckende Schenkel 142 und 144 aufweisen, aus denen die Krallen 132 und 134 in Richtung aufeinanderzu ausgebogen sind und so verlaufen, dass das Krallenelement 130 in Richtung einer Aufschieberichtung 152 auf die Leiste 54 aufschiebbar ist, wobei in dieser Aufschieberichtung 152 die Krallen 132 und 134 unwirksam sind, während sie sich bei einer Bewegung des Krallenelements 130 entgegengesetzt zur Aufschieberichtung 152 im Material der Leiste 54 festkrallen.

Ferner sind die Krallen 136 und 138 in Richtung voneinander weg aus den Schenkeln 142, 144 ausgebogen, so dass sich die Krallen 136, 138 beim Einschieben des Krallenelements 130 in Richtung einer Einschieberichtung 154 in die Vertiefung 84 an der Außenwand 64 und dem Steg 68 nicht verkrallen, jedoch bei einer Bewegung entgegengesetzt zur Einschieberichtung sowohl an der Außenwand 64 als auch an dem Steg 68 eingraben und in diesen verkrallen.

Ein derartiges Krallenelement 130 wird nun beim zweiten Ausführungsbeispiel der erfindungsgemäßen Windstopeinrichtung 10 dazu eingesetzt um die Rahmenteile 20' und 22' fest und dauerhaft miteinander zu verbinden, wobei das Krallenelement 130 entweder zuerst auf die Leiste 54 aufgesetzt und dann mit dem Rahmenteil 20' in die Vertiefung 84 des zweiten Rahmenteils 22' eingeführt werden kann oder das Krallenelement 130 zunächst in die Vertiefung 84 eingeführt werden kann und dann beim Zusammensetzen der Rahmenteile 20' und 22' die Leiste 54 in das Krallenelement 130 zwischen den Schenkeln 142 und 144 eingeführt werden kann.

Ergänzend zu dem Vorsehen der Krallenelemente 130 können bei einer Variante des zweiten Ausführungsbeispiels auch noch zusätzlich die Verbindungselemente 50 und 80 vorgesehen werden, die eine noch präzisere Ausrichtung der Rahmenteile 20' und 22' relativ zueinander gewährleisten würden.

Ferner kann bei einer Variante des zweiten Ausführungsbeispiels ergänzend zu den Krallenelementen 130 auch noch eine stoffschlüssige Verbindung der Rahmenteile 20' und 22', beispielsweise durch Einbringen eines Klebers erfolgen.

## Patentansprüche

1. Schutzeinrichtung für Kraftfahrzeuge, insbesondere Wind- und/oder Lichtschutzeinrichtung für Kraftfahrzeuge, umfassend einen eine Rahmenöffnung (12) umschließenden Rahmen (14) und ein die Rahmenöffnung (12) verschließendes, am Rahmen (14) gehaltenes Flachmaterial (16), welches sich in der Rahmenöffnung (12) in einer Aufspannebene (104) erstreckt, wobei der Rahmen (14) aus zwei jeweils die Rahmenöffnung (12) umschließenden Rahmenteilen (20, 22) gebildet ist, die miteinander verbunden sind, wobei zwischen den fest miteinander verbundenen Rahmenteilen (20, 22) das Flachmaterial (16) mit einem Randbereich (26) gehalten ist und ein erstes Rahmenteil (20) ein Fixierelement (30) aufweist, an welchem der Randbereich (26) des Flachmaterials (16) formschlüssig fixierbar ist,
**dadurch gekennzeichnet, dass** das Fixierelement (30) spitz ausgebildete Eingreifelemente (34) aufweist, welche in den vor einem Kontakt mit den Eingreifelementen (34) unversehrten Randbereich (26) des Flachmaterials (16) durchdringen.

2. Schutzeinrichtung nach Anspruch 1, **dadurch gekennzeichnet, dass** die den Randbereich (26) durchdringenden Eingreifelemente (34) mit Endbereichen (94) auf einer Seite des Randbereichs (26) über diesen überstehen.

3. Schutzeinrichtung nach einem der voranstehenden Ansprüche, **dadurch gekennzeichnet, dass** die Eingreifelemente (34) nadelähnlich ausgebildet sind.

4. Schutzeinrichtung nach einem der voranstehenden Ansprüche, **dadurch gekennzeichnet, dass** sich die Eingreifelemente (34) mit ihren Längsachsen (38) parallel zueinander erstrecken, und dass sich insbesondere die Eingreifelemente (34) ungefähr senkrecht zur Aufspannebene (18) erstrecken.

5. Schutzeinrichtung nach einem der voranstehenden Ansprüche, **dadurch gekennzeichnet, dass** das Fixierelement (30) eine Auflagefläche (32) für den Randbereich (26) des Flachmaterials (16) aufweist, und dass insbesondere die Eingreifelemente (34) über die Auflagefläche (32) überstehen.

6. Schutzeinrichtung nach einem der voranstehenden Ansprüche, **dadurch gekennzeichnet, dass** an einem zweiten Rahmenteil (22) ein Niederhalteelement (62, 68) angeordnet ist, welches den Randbereich in Eingriff mit den Eingreifelementen hält.

7. Schutzeinrichtung nach einem der voranstehenden Ansprüche, **dadurch gekennzeichnet, dass** die Rahmenteile (20, 22) im verbundenen Zustand an die Rahmenöffnung angrenzende Innenwände (42, 62) aufweisen, welche mit Führungsflächen (46, 66) einen sich in der Rahmenöffnung (12) erstreckenden Innenbereich (24) des Flachmaterials (16) in der Aufspannfläche (18) geführt halten und dass insbesondere im verbundenen Zustand der Rahmenteile (20, 22) die Auflagefläche (32) des Fixierelements (30) in Richtung quer zur Aufspannfläche (104) im Abstand von dieser angeordnet ist.

8. Schutzeinrichtung nach einem der voranstehenden Ansprüche, **dadurch gekennzeichnet, dass** beide Rahmenteile (20, 22) Verbindungselemente (50, 80) aufweisen, die kraftschlüssig miteinander in Eingriff verbindbar sind.

9. Schutzeinrichtung nach Anspruch 8, **dadurch gekennzeichnet, dass** eines der Verbindungselemente (50) als Zapfen ausgebildet ist und das andere der Verbindungselemente (80) als Hülse ausgebildet ist, und dass insbesondere das als Zapfen ausgebildete Verbindungselement (50) reibschlüssig in dem als Hülse ausgebildeten Verbindungselement (80) fixierbar ist.

10. Schutzeinrichtung nach Anspruch 8 oder 9, **dadurch gekennzeichnet, dass** die Verbindungselemente (50, 80) auf einer der Rahmenöffnung (12) abgewandten Seite des Fixierelements (30) angeordnet sind.

11. Schutzeinrichtung nach einem der voranstehenden Ansprüche, **dadurch gekennzeichnet, dass** die Rahmenteile (20, 22) durch Krallen (132, 134, 136, 138) relativ zueinander fixierbar sind.

12. Schutzeinrichtung nach Anspruch 11, **dadurch gekennzeichnet, dass** die Krallen (132, 134, 136, 138) in einem an einem der Rahmenteile (20, 22) vorgesehenen Innenbereich (40) angeordnet sind.

13. Schutzeinrichtung nach Anspruch 12, **dadurch gekennzeichnet, dass** sich die Krallen (136, 138) an einem im Innenbereich (60) im anderen Verbindungselement (22) vorgesehenen Krallengegenelement (68, 64) verkrallen.

14. Schutzeinrichtung nach einem der Ansprüche 11 bis 13, **dadurch gekennzeichnet, dass** die Krallen (136, 138) in einer Einschieberichtung (154) zum Krallengegenelement (68, 64) verschiebbar sind und sich bei einer Bewegung in entgegengesetzter Richtung zur Einschieberichtung sich in das Krallengegenelement (68, 64) eingraben.

## Claims

1. Protection device for motor vehicles, in particular wind and/or light protection device for motor vehicles, comprising a frame (14) surrounding a frame opening (12) and a flat material (16) held on the frame (14) and closing the frame opening (12), said material extending in the frame opening (12) in a plane of tensioning (104), wherein the frame (14) is formed from two frame parts (20, 22) each surrounding the frame opening (12) and being connected to one another, wherein the flat material (16) is held between the frame parts (20, 22) securely connected to one another with an edge area (26) and a first frame part (20) has a fixing element (30), the edge area (26) of the flat material being fixable to said fixing element in a form locking manner,
**characterized in that** the fixing element (30) has engaging elements (34) of a pointed design penetrating the edge area (26) of the flat material (16), said edge area being intact prior to contact with the engaging elements (34).

2. Protection device as defined in claim 1, **characterized in that** the engaging elements (34) penetrating the edge area (26) project beyond the edge area (26) on one side thereof with end areas (94).

3. Protection device as defined in either one of the preceding claims, **characterized in that** the engaging elements (34) are of a needle-like design.

4. Protection device as defined in any one of the preceding claims, **characterized in that** the engaging elements (34) extend parallel to one another with their longitudinal axes (38) and that the engaging elements (34), in particular, extend approximately at right angles to the plane of tensioning (18).

5. Protection device as defined in any one of the preceding claims, **characterized in that** the fixing element (30) has a supporting surface (32) for the edge area (26) of the flat material (16) and that the engaging elements (34), in particular, project beyond the supporting surface (32).

6. Protection device as defined in any one of the preceding claims, **characterized in that** a hold-down element (62, 68) is arranged on a second frame part (22), said element keeping the edge area in engagement with the engaging elements.

7. Protection device as defined in any one of the preceding claims, **characterized in that** in their connected state the frame parts (20, 22) have inner walls (42, 62) bordering on the frame opening and keeping the inner area (24) of the flat material (16) guided in the tensioning surface (18) with guide surfaces (46, 66), said inner area extending in the frame opening (12), and that the supporting surface (32) of the fixing element (30) is arranged at a distance from the tensioning surface (104) in a direction transverse thereto, in particular in the connected state of the frame parts (20, 22).

8. Protection device as defined in any one of the preceding claims, **characterized in that** both frame parts (20, 22) have connecting elements (50, 80) connectable to one another in force locking engagement.

9. Protection device as defined in claim 8, **characterized in that** one of the connecting elements (50) is designed as a pin and the other one of the connecting elements (80) is designed as a sleeve and that the connecting element (50) designed as a pin is, in particular, fixable in the connecting element (80) designed as a sleeve in a friction locking manner.

10. Protection device as defined in claim 8 or 9, **characterized in that** the connecting elements (50, 80) are arranged on a side of the fixing element (30) facing away from the frame opening (12).

11. Protection device as defined in any one of the preceding claims, **characterized in that** the frame parts (20, 22) are fixable relative to one another by claws (132, 134, 136, 138).

12. Protection device as defined in claim 11, **characterized in that** the claws (132, 134, 136, 138) are arranged in an inner area (40) provided in one of the frame parts (20, 22).

13. Protection device as defined in claim 12, **characterized in that** the claws (136, 138) catch in a claw counterpart (68, 64) provided in the inner area (60) in the other connecting element (22).

14. Protection device as defined in any one of claims 11 to 13, **characterized in that** the claws (136, 138) are displaceable in an insertion direction (154) relative to the claw counterpart (68, 64) and dig into the claw counterpart (68, 64) during movement in a direction contrary to the insertion direction.

## Revendications

1. Dispositif de protection pour véhicules automobiles, en particulier dispositif de protection pare-vent et/ou pare-lumière pour véhicules automobiles, comprenant un cadre (14) entourant une ouverture de cadre (12) et un élément plat (16) obturant l'ouverture de cadre (12) et maintenu sur le cadre (14), lequel s'étend sur un plan de fixation (104) dans l'ouverture de cadre (12), où le cadre (14) est formé par deux pièces de cadre (20, 22) enserrant l'ouverture de cadre (12), raccordées l'une à l'autre, où l'élément plat (16) est maintenu par une zone de bord (26) entre les pièces de cadre (20, 22) fixement raccordées l'une à l'autre, et où une première pièce de cadre (20) comporte un élément de fixation (30) contre lequel la zone de bord (26) de l'élément plat (16) est fixable par accouplement mécanique,
**caractérisé en ce que** l'élément de fixation (30) comporte des éléments d'engagement (34) de forme pointue, qui percent la zone de bord (26) de l'élément plat (16) restée intacte avant un contact avec lesdits éléments d'engagement (34).

2. Dispositif de protection selon la revendication 1, **caractérisé en ce que** les éléments d'engagement (34) perçant la zone de bord (26) dépassent d'un côté de la zone de bord (26) par des parties d'extrémité (94).

3. Dispositif de protection selon l'une des revendications précédentes, **caractérisé en ce que** les éléments d'engagement (34) sont réalisés semblables à des aiguilles.

4. Dispositif de protection selon l'une des revendications précédentes, **caractérisé en ce que** les éléments d'engagement (34) s'étendent parallèlement l'un à l'autre par leurs axes longitudinaux (38), et en particulier **en ce que** les éléments d'engagement (34) s'étendent sensiblement perpendiculairement au plan de fixation (18).

5. Dispositif de protection selon l'une des revendications précédentes, **caractérisé en ce que** l'élément de fixation (30) présente une surface d'appui (32) pour la zone de bord (26) de l'élément plat (16), et en particulier **en ce que** les éléments d'engagement (34) dépassent de la surface d'appui (32).

6. Dispositif de protection selon l'une des revendications précédentes, **caractérisé en ce qu'**un élément de serrage (62, 68) est disposé sur une deuxième pièce de cadre (22), lequel maintient la zone de bord en contact avec les éléments d'engagement.

7. Dispositif de protection selon l'une des revendications précédentes, **caractérisé en ce que** les pièces de cadre (20, 22) présentent en état de raccordement des parois intérieures (42, 62) adjacentes à l'ouverture de cadre, lesquelles maintiennent sur le plan de fixation (18) en la guidant par des surfaces de guidage (46, 66) une partie intérieure (24) de l'élément plat (16) qui s'étend dans l'ouverture de cadre (12), et en particulier **en ce qu'**en état de raccordement des pièces de cadre (20, 22), la surface d'appui (32) de l'élément de fixation (30) est espacée du plan de fixation (104) dans une direction transversale à celui-ci.

8. Dispositif de protection selon l'une des revendications précédentes, **caractérisé en ce que** les deux pièces de cadre (20, 22) comportent des éléments de raccordement (50, 80) qui peuvent être accouplés les uns aux autres par enclenchement mécanique.

9. Dispositif de protection selon la revendication 8, **caractérisé en ce qu'**un des éléments de raccordement (50) est réalisé comme tenon et l'autre élément de raccordement (80) comme douille, et en particulier **en ce que** l'élément de raccordement (50) réalisé comme tenon est fixable par accouplement par friction dans l'élément de raccordement (80) réalisé comme douille.

10. Dispositif de protection selon la revendication 8 ou la revendication 9, **caractérisé en ce que** les éléments de raccordement (50, 80) sont disposés sur un côté de l'élément de fixation (30) distant de l'ouverture de cadre (12).

11. Dispositif de protection selon l'une des revendications précédentes, **caractérisé en ce que** les pièces de cadre (20, 22) sont fixables l'une par rapport à l'autre au moyen d'ergots (132, 134, 136, 138).

12. Dispositif de protection selon la revendication 11, **caractérisé en ce que** les ergots (132, 134, 136, 138) sont disposés dans une partie intérieure (40) prévue sur une des pièces de cadre (20, 22).

13. Dispositif de protection selon la revendication 12, **caractérisé en ce que** les ergots (136, 138) ont prise sur un contre-élément d'ergot (68, 64) prévu dans la partie intérieure (60) de l'autre pièce de cadre (22).

14. Dispositif de protection selon l'une des revendications 11 à 13, **caractérisé en ce que** les ergots (136, 138) sont déplaçables vers le contre-élément d'ergot (68, 64) dans une direction d'insertion (154) et se fichent dans le contre-élément d'ergot (68, 64) en cas de mouvement dans la direction opposée à la direction d'insertion.
